# EUROPEAN PATENT APPLICATION

(11) **EP 4 648 454 A1**
(43) Date of publication of application: **12.11.2025**
(21) Application number: 24305712.2
(22) Date of filing: 06.05.2024
(51) Int. Cl.: H04W 12/08, H04W 8/18, H04W 12/30, H04W 48/04, H04W 48/18, H04W 60/00, H04L 9/40, H04W 12/63, H04W 12/69

(54) **TELECOMMUNICATION TERMINAL, CORRESPONDING SECURE ELEMENT AND METHOD FOR FORBIDDING TO CONNECT TO ANY NETWORK OR A GENERATION OF A NETWORK OF A LIST**

(71) Applicant: THALES DIS FRANCE SAS, 92190 Meudon (FR)
(72) Inventor: PAULIAC, Mireille, 13740 CARNOUX EN PROVENCE (FR); PHAN, Ly Thanh, 92350 LE PLESSIS ROBINSON (FR); DANY, Vincent, 13400 AUBAGNE (FR)
(74) Representative: Scheer, Luc

(57) **Abstract**

The invention proposes a telecommunication terminal comprising a secure element, the secure element or the telecommunication terminal comprising a file comprising a list of countries and, for each country, a list of at least a generation of networks or radio access technologies to which the telecommunication terminal is forbidden to connect, the telecommunication terminal, in presence in one of these countries, being forbidden to connect to any network of a generation of a network or radio access technology listed in the list.

## Description

The present invention concerns telecommunications in cellular networks (public or private). The aim of the invention is to avoid, for telecommunication terminals like smartphones for example, to be treated by vulnerabilities exploited in previous telecommunication networks, like 2G networks in particular.

3GPP members are now working on 6G (G standing for "generation") networks but 2G, 3G, 4G and 5G networks are still existing.

In particular, in some countries, only 2G networks are existing and the risk, for 3G, 4G, 5G and, in the future, 6G terminal users, is that some attackers can approach users with fake base stations working in 2G in order to switch the secure element (Sim card, UICC, eUICC, iUICC,...) cooperating with a telecommunication terminals' user in 2G. In 2G there is less security, no mutual authentication between the secure element integrated in the terminal and the network and the communications can be easily hacked, attacked or spied.

While vulnerabilities exist in older technologies like 3G compared to newer ones like 4G and 5G, the most pressing concerns today are centered around 2G. Mobile network operators (MNOs) are hesitant to prevent 3G, 4G, and 5G devices to use 2G access technologies, as they want to maintain the ability to roam internationally in countries where 2G is still the only available access technology. This allows users to remain connected while traveling abroad, even if it's just through 2G access. In nations like Canada, the US, South Korea, Japan, and Singapore, 2G networks have already been phased out. In Europe, a similar transition is underway, with many countries planning to shut down their 2G infrastructure in the near future. However, in contrast, African countries are expected to take a more gradual approach, delaying the migration to more advanced cellular technologies for the time being. The topic has already been debated within the 3GPP Technical Specification Group Service and System Aspects (TSG SA), specifically in WG3 (SA3). The main goal of this group is to establish requirements, architectures, and protocols for ensuring security and privacy in 3GPP systems. Despite previous discussions and proposed solutions, none have yet met the desired security objectives, leaving room for further development and refinement.: The proposed solutions using Public Land Mobile Network Identity (PLMN-ID) for location determination are vulnerable to attacks. An attacker could exploit this by intentionally disrupting higher access technology signals (e.g., 3G, 4G, or 5G) and broadcasting a PLMN-ID that corresponds to a 2G network. This would trick the terminal into connecting to the 2G network, enabling the attacker to intercept and compromise sensitive information.

For instance, if a terminal is located in the United States, where 2G networks are no longer operational, any presentation of a 2G network to the device would be suspicious and likely indicate an attack attempt.

The present invention proposes a solution to these problems.

The invention relies on the terminal's geographical location. By utilizing GPS data and other positioning methods, the terminal can accurately determine its country, region, or state-level location. This concept has been implemented in satellite communications, where terminals like smartphones need to know their position for international network connectivity.

Additionally, a digital map of the world can be stored within the modem or secure element comprised in this terminal, ensuring precise and reliable location information management.

The invention thus proposes a telecommunication terminal according to claims 1 to 5, a secure element according to claims 6 to 10 and a method according to claim 11.

The present invention will be better understood by reading the following description of a preferred embodiment of the invention.

A telecommunication terminal that is typically a smartphone but can also be an loT device, and comprises a secure element, like a SIM card, a USIM, a UICC, an eUICC or an iUICC for example. The whole constitutes a user equipment (UE).

The secure element or the telecommunication terminal comprises a file comprising a list of countries and, for each country, a list of at least a generation of networks or radio access technology to which the telecommunication terminal is forbidden to connect.

In this document, the terms "generation" (e.g., 2G, 3G, 4G, etc.) and "radio access technology" (e.g., LTE, GSM, etc.) are used synonymously to refer to different types of 3GPP radio access networks.

A telecommunication terminal located in one of these countries is restricted from connecting to local networks using radio access technologies present in that list for that specific country. For instance, terminals operating in the USA or Canada are prohibited from accessing 2G networks, as these technologies have been phased out in these regions. If a terminal detects a 2G network while present in one of these countries, it can be considered a potential attack attempt. The terminal is thus protected from connecting to such fake networks.

Additionally, it is possible to restrict the telecommunication terminal from connecting to a specific network generation or access technology (e.g., 2G) for certain service types defined in the list. For instance, data usage could be forbidden while roaming in countries with only 2G networks, allowing users to only make voice calls and still be protected from potentially malicious connections.

In addition, users can be given the option to decide whether they want to connect to a detected network. To do so, an application that has access to the list of available networks requires the user's consent before allowing the terminal to join a particular network. In scenarios where the terminal is operating on a 2G network, for instance, a warning message may be displayed to alert the user that they are using a potentially less secure connection. It then falls to the user to make the decision about whether to continue using this network or seek an alternative. This feature can be particularly useful in emergency situations where the user may need to make an urgent call over an insecure network. Of course, this solution is only applicable to consumer products, not for loT.

The list can also contain a list of at least one generation of networks or radio access technology that are prohibited from being accessed by the telecommunication terminal, for non-listed countries. This enables Mobile Network Operators (MNOs) to exercise control over the level of security provided by their terminals and secure elements. Preferably, the list contains a list of at least a generation of networks or radio access technology to which the telecommunication terminal is forbidden to connect when the telecommunication terminal is not able to determine the country where it is located. This can be interesting when no GPS data are available, for example when the user is not under the coverage of satellites.

The invention also concerns a secure element comprising a list of countries and, for each country, a list of at least a generation of networks or radio access technology to which a telecommunication terminal with which it cooperates is forbidden to connect, the telecommunication terminal, in presence in one of these countries, being forbidden by the secure element to connect to any networks of a generation of a network or radio access technologies listed in the list.

This list preferably forbids the telecommunication terminal to connect to a generation of a network or radio access technology only for some service types defined in the list.

As for the terminal, the list stored in the secure element cooperates with an application (in the terminal or in the secure element) requiring user's consent to allow the telecommunication terminal to connect to a generation of a network or radio access technology.

The list can contain a list of at least a generation of networks or radio access technology to which the telecommunication terminal is forbidden to connect for non-listed countries.

Finally, the list stored in the secure element can contain a list of at least a generation of networks or radio access technology to which the telecommunication terminal is forbidden to connect when the telecommunication terminal is not able to determine the country where it is located.

The invention also concerns a method for forbidding a telecommunication terminal to a network, the telecommunication terminal comprising a secure element, the secure element or the telecommunication terminal comprising a file comprising a list of countries and, for each country, a list of at least a generation of networks or radio access technology to which the telecommunication terminal is forbidden to connect, the method comprising forbidding the telecommunication terminal, in presence in one of these countries, to connect to any network of a generation of a network or radio access technology listed in the list.

The list of countries and generation of networks or radio access technology can be updated via OTA for example.

It is also possible to use an algorithm, stored in the terminal or in the secure element that detects that, after having been connected to a secure 5G network, suddenly a 2G network with more power is detected. This can be an attacker coming with a fake BTS in proximity of the user. Then, instead of connecting to this more powerful 2G network, the terminal or the secure element stays on a less well received, but more secured 5G network.

The core concept is to maintain a list of prohibited radio access technologies by country. Each operator, such as Operator X, will define the services or radio access technologies (network generations) that their users are allowed to use in a specific country. In other words, Operator X will determine what services are available to their customers based on the country they are in. This approach allows operators to adapt and extend their restrictions as needed, for instance, by initially restricting access to 2G networks but later adding restrictions for 3G, 4G, or 5G when issues arise, ultimately limiting connections only to newer generations of networks like 6G. An operator can initially take a two-pronged approach. They may start by listing countries where they do not want to allow certain radio access technologies, such as 2G. For instance, they might specify that when roaming in the US or Canada, 2G is blocked. As the need arises for more fine-grained control, they can create a separate list of exceptions, specifying which countries are allowed to use 2G (for example, Gabon). Having a default block setting for most countries, with specific exceptions as needed, can simplify the management of these lists and make it easier to enforce their policies. Additionally, there can be distinct policies in place for public and private networks. It is also possible to establish specific rules based on the generation of the connection or radio access technology. An evident example of this is emergency calls, where the Mobile Network Operator (MNO) may decide that it is necessary (e.g. due to local regulations) to allow such calls despite the associated risks, as it prioritizes the ability to save lives or compliance to local regulations.

The proposed solution prevents bidding down attacks and addresses roaming scenarios.

The solution relies only on information stored in the UE: Configuration information stored on the secure element or in the terminal and location information known by the UE. The solution does not rely on information sent by a base station, as this base station could potentially be a fake base station.

So, in details, the secure element is configured with a list where each entry indicates one or several radio access technologies (e.g. UTRAN or GERAN) forbidden in a defined country. This list can also contain specific entries:
∘ to define one or several access technologies forbidden by default in case that the country, identified by the UE according to the location of the UE, is not listed.
∘ to define one or several access technologies forbidden when the location of the UE cannot be determined by the UE.

- For each entry of the list, it is possible to provide additional information on the policy to apply, e.g:
   ∘ it could be indicated if the policy applies to public network, to private network, or to both.
   ∘ it could be possible to determine a specific behavior of the UE in case that the technology is forbidden, e.g. to define a warning message to the user instead of blocking the access.

During the network selection procedure, which takes place before registration,
- The UE determines the country where the UE is located thanks to the location information known by the UE.
- The UE checks that the proposed access technology to establish the communication is not forbidden by the list stored in the USIM or the ME. If the access technology is forbidden according to the list in the USIM or the ME, the UE can stop the procedure.

Exception may apply to specific services, e.g. emergency calls.

The content of this file is under the control of the home operator. The file could be updated by means of Over-The-Air transport mechanism e.g. UE Parameters Update, Steering of Roaming (SoR) transport mechanisms as specified in 3GPP TS 24.501 with end-point in the ME or USIM. A second file under the control of the user could also configured in the secure element or the ME.

The proposed solution relies only on information stored in the UE: Configuration information stored on the USIM (or ME) and location information determined by the UE. The solution avoids relying on information sent by a base station, as this base station could potentially be a fake base station providing for example fraudulent SMS or phone call.

The ability for a UE to determine its location is already defined in 3GPP, e.g. for NTN communications.

It is also possible to determine the position of the UE thanks to surrounding base stations with the risk of fake base stations.

## Claims

1. A telecommunication terminal comprising a secure element, said secure element or said telecommunication terminal comprising a file comprising a list of countries and, for each country, a list of at least a generation of networks or radio access technologies to which said telecommunication terminal is forbidden to connect, said telecommunication terminal, in presence in one of these countries, being forbidden to connect to any network of a generation of a network or radio access technologies listed in said list.

2. A telecommunication terminal according to claim 1 wherein said list forbids said telecommunication terminal to connect to a generation of a network or radio access technologies only for some service types defined in said list.

3. A telecommunication terminal according to claims 1 or 2 wherein said list requires user consent to allow said telecommunication terminal to connect to a generation of a network or radio access technologies.

4. A telecommunication terminal according to any of the claims 1 to 3 wherein said list contents a list of at least a generation of networks or radio access technology to which said telecommunication terminal is forbidden to connect for non-listed countries.

5. A telecommunication terminal according to any of the claims 1 to 4 wherein said list contents a list of at least a generation of networks or radio access technologies to which said telecommunication terminal is forbidden to connect when said telecommunication terminal is not able to determine the country where it is located.

6. A secure element comprising a list of countries and, for each country, a list of at least a generation of networks or radio access technologies to which a telecommunication terminal with which it cooperates is forbidden to connect, said telecommunication terminal, in presence in one of these countries, being forbidden by said secure element to connect to any network of a generation of a network or radio access technology listed in said list.

7. A secure element according to claim 6 wherein said list forbids said telecommunication terminal to connect to a generation of a network or radio access technology only for some service types defined in said list.

8. A secure element according to claims 6 or 7 wherein said list requires user consent to allow said telecommunication terminal to connect to a generation of a network or radio access technology.

9. A secure element according to any of the claims 6 to 8 wherein said list contents a list of at least a generation of networks or radio access technologies to which said telecommunication terminal is forbidden to connect for non-listed countries.

10. A secure element according to any of the claims 6 to 9 wherein said list contents a list of at least a generation of networks or radio access technologies to which said telecommunication terminal is forbidden to connect when said telecommunication terminal is not able to determine the country where it is located.

11. A method for forbidding a telecommunication terminal to connect to a network, said telecommunication terminal comprising a secure element, said secure element or said telecommunication terminal comprising a file comprising a list of countries and, for each country, a list of at least a generation of networks or radio access technologies to which said telecommunication terminal is forbidden to connect, said method comprising forbidding said telecommunication terminal, in presence in one of these countries, to connect to any network of a generation of a network or radio access technology listed in said list.
